# EUROPÄISCHE PATENTANMELDUNG

(11) **EP 1 550 797 A2**
(43) Veröffentlichungstag der Anmeldung: **06.07.2005**
(21) Anmeldenummer: 03104468.8
(22) Anmeldetag: 01.12.2003
(51) Int. Cl.: F01N 3/22, F02D 9/02

(54) **Verfahren und Vorrichtung zur Regelung eines Sekundärluftstroms bei einer Verbrennungsmaschine**

(30) Priorität: 07.12.2002 DE 10257287
(71) Anmelder: MANN+HUMMEL GmbH, 71638 Ludwigsburg (DE)
(72) Erfinder: Hummel, Karl-Ernst, 74321, Bietigheim-Bissingen (DE); Beylich, Markus, 71636, Ludwigsburg (DE)

(57) **Zusammenfassung**

Die Erfindung betrifft ein Verfahren und eine Vorrichtung zur Regelung eines Sekundärluftstromes im Abgassystem eines Verbrennungsmotors für ein Kraftfahrzeug, mit Regeleinrichtungen (39,40) zur Auswertung von Stell- und Sensorsignalen der Motorsteuerung und zur Einstellung des Sekundärluftstroms (21). Als Sensorgröße zur Einbeziehung in die Regelung mit der Regeleinrichtung (39) wird zur Einstellung des Sekundärluftstroms (21) die Stellung des Gaspedals (45) des Kraftfahrzeugs mit einbezogen.

## Beschreibung

### Stand der Technik

Die Erfindung betrifft ein Verfahren und eine Vorrichtung zur Regelung eines Sekundärluftstroms bei einer Verbrennungsmaschine, nach dem Oberbegriff des Hauptanspruchs.

Es ist beispielsweise aus der DE 100 05 888 A1 bekannt, dass in der Aufheizphase der Abgasanlage eines Verbrennungsmotors hinter dem Katalysator ein Sekundärluftstrom geregelt eingestellt wird. Die Notwendigkeit zur Zuführung eins solchen Sekundärluftstroms ergibt sich in der im Stand der Technik beschriebenen Weise insbesondere bei mager betriebenen Verbrennungsmotoren, insbesondere bei direkt eingespritzten Otto-Motoren mit Speicherkatalysatoren für Stickoxyde.

Hierbei kann der aus dem Kraftstoff stammende Schwefel die Wirkung des Speicherkatalysators nach längerem Betrieb einschränken. Da die Sulfateinlagerung in gewissen Grenzen jedoch reversibel ist, wird hierzu der Motor über einen vorgegebenen Zeitbereich fett und bei hohen Abgastemperaturen betrieben um eine Reinigung des Speicherkatalysators zu bewirken. Zur Erzeugung dieses Betriebszustandes wird das gattungsgemäße Sekundärluftsystem verwendet.

Als Regelgröße für die Einstellung der Sekundärluftmenge wird bei den bekannten Systemen zusätzlich zu Luftmassensensoren vornehmlich auch die Stellung der Drosselklappe im Ansaugtrakt des Verbrennungsmotors herangezogen.

### Aufgabenstellung

Der Erfindung liegt die Aufgabe zugrunde, ein Verfahren und eine Vorrichtung der eingangs genannten Art so fortzubilden, dass eine einfache und möglichst zeitnahe Regelung eines optimalen Sekundärluftstromes möglich wird.

### Vorteile der Erfindung

Ein Verfahren und eine Vorrichtung zur Regelung eines Sekundärluftstromes im Abgassystem eines Verbrennungsmotors für ein Kraftfahrzeug weist gattungsgemäß eine Regeleinrichtung zur Auswertung von Stell- und Sensorsignalen der Motorsteuerung und zur Einstellung des Sekundärluftstroms auf. Erfindungsgemäß wird in vorteilhafter Weise als Sensorgröße zur Einbeziehung in die Regelung mit der Regeleinrichtung die Stellung des Gaspedals des Kraftfahrzeugs mit ausgewertet. Die Stellung des Gaspedals kann dazu mit einfachen Mitteln mit geeigneten Sensoren erfasst werden und neben der Auswertung in einer zentralen Motorsteuerung für eine Vielzahl von Motorfunktionen auch parallel dazu direkt der Regeleinrichtung zur Einstellung des Sekundärluftstroms zugeführt werden.

In vorteilhafter Weise mündet die Sekundärluftzuführung in eine Zuführung einer Abgasanlage vor einem Katalysator, dem hier noch ein Speicherkatalysator nachgeschaltet ist, wobei die nachgeschaltete Anordnung eines solchen Speicherkatalysators für sich gesehen aus der DE 198 16 276 A1 bekannt ist.

Am Gaspedal des Kraftfahrzeuges ist für die Einstellung des Sekundärluftstroms ein Stellungssensor für die mechanische Auslenkung des Gaspedals angebracht und das Ausgangsignal des Stellungssensors wird der Regeleinrichtung zur Einstellung des Sekundärluftstroms diskret oder über ein fahrzeugeigenes Bussystem zugeführt.

Die Erfindung ist vor allem deswegen vorteilhaft, da in neueren Kraftfahrzeugen immer häufiger auf eine direkte mechanische Kopplung vom Gaspedal und der Drosselklappe im Ansaugtrakt des Verbrennungsmotors, z. B. mittels eines Bowdenzugs, verzichtet wird. Bei der nunmehr oft angewandten elektronischen Steuerungen der Motorfunktionen (drive-by-wire) und elektronischen Signalisierung der Pedalstellung besteht die Gefahr, dass die Differenz zwischen der tatsächlichen Stellung des Gaspedals und der Stellung der Drosselklappe, die ihr Stellsignal meist von der Motorsteuerung bekommt, damit immer größer wird.

Die direkte dem Fahrerwunsch entsprechende Stellung des Gaspedals ist im Resultat immer unterschiedlicher zu dem Ergebnis, welches z.B. zur Regelung der Drosselklappe die Motorsteuerung daraus berechnet worden ist, da diese nach dem Eingriff von diversen Regeleinrichtungen, wie z.B. einer sogenannten Antischlupf-Regelung oder anderen Regeleinrichtungen, immer mehr verändert wird.

Durch diesen in der Zukunft immer größeren Unterschied zwischen der Gaspedalstellung und der Drosselklappenstellung ist es mit der erfindungsgemäßen Lösung insbesondere möglich, beispielsweise einen kommenden Einbruch des Saugrohrdrucks im Ansaugsystem möglichst frühzeitig zu erkennen um schnell darauf reagieren zu können, da das Signal des Gaspedals hier diese Information zuerst ausgibt.

### Zeichnung

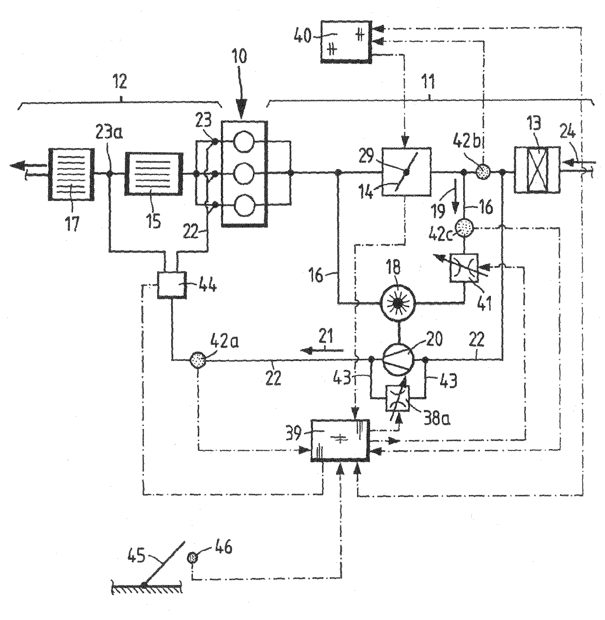

Die Erfindung wird anhand einer im Prinzip aus dem Stand der Technik bekannten und erfindungsgemäß erweiterten Regeleinrichtung zur Regelung des Sekundärluftstroms in einem Otto-Verbrennungsmotor anhand der einzigen Figur der Zeichnung erläutert.

### Beschreibung des Ausführungsbeispiels

In der Figur ist eine Brennkraftmaschine 10 vorgesehen, welche mit einem Ansaugtrakt 11 und einer Abgasanlage 12 ausgestattet ist. Im Ansaugtrakt befindet sich zumindest ein Luftfilter 13 und eine Drosselklappe 14 und die Abgasanlage ist mit einem Katalysator 15 ausgestattet. Hinter dem Luftfilter 13 und vor der Drosselklappe 14 zweigt eine Umgehungsleitung 16 ab, die dem Ansaugtrakt 11 hinter der Drosselklappe wieder zugeführt wird.

Weiterhin ist eine Turbine 18 in der Umgehungsleitung 16 angeordnet, die durch einen Umgehungsluftstrom 19 angetrieben wird. Die Turbine ist mechanisch mit einem Verdichter 20 gekoppelt, der einen Sekundärluftstrom 21 in einer Sekundärluftleitung 22 fördert. Die Sekundärluftleitung mündet in eine Zuführung 23 der Abgasanlage 12 vor dem Katalysator 15, dem hier noch ein Speicherkatalysator 17 (DeNOx-katalysator) nachgeschaltet ist. Die Flussrichtungen eines Ansaugluftstromes 24 des Umgehungsluftstromes 19 und des Sekundärluftstromes 21 sowie des Abgases sind durch Pfeile entlang der Leitungen angedeutet.

Das zuvor beschriebene Sekundärluftsystem ist mit einer Steuereinheit 39 ausgestattet, welche mit einer Motorsteuerung 40 kommuniziert. Für die Steuerung des Ventils können Kennfelder in der Steuereinheit 39 abgelegt sein, die die Verarbeitung diverser Messwerte des Sekundärluftsystems und des Motors ermöglichen. Es werden zumindest der Mengendurchsatz des Sekundärluftstroms 21 mit Hilfe eines Sensors 42a und die Drosselklappenstellung ermittelt. An Stelle des Sensors 42a kann auch ein Sensor 42c vorgesehen werden, der den Luftstrom auf der Turbinenseite misst. Durch die mechanische Kopplung zwischen Verdichter 20 und Turbine 18 ist damit auch ein Rückschluss auf den Sekundärluftstrom möglich. Weiterhin können Informationen der Motorsteuerung einfließen, wie z. B. der Mengendurchsatz an Verbrennungsluft im Ansaugtrakt 11, gemessen durch den Sensor 42b.

Die Steuereinheit 39 dient zur gleichzeitigen Ansteuerung des Steuerventils 41 und eines Drosselventils 38a. Das Steuerventil regelt den Umgehungsluftstrom 19, während das Drosselventil 38a zur Regulierung des effektiven Sekundärluftstroms gedacht ist. Das Drosselventil 38a ist nämlich in einer Zusatzleitung 43 vorgesehen, die einen Bypass für den Verdichter 20 bildet.

Dadurch kann durch Öffnung des Drosselventils 38a und Rückführung der verdichteten Luft der effektive Sekundärluftstrom reguliert werden. Gemäß der Erfindung weist die Steuereinheit 39 einen weiteren Eingang für eine Regelgröße auf, die von der Stellung eines Gaspedals 45 des Kraftfahrzeuges ohne Verarbeitung in der Motorsteuerung abgeleitet ist. Mit einem Sensor 46 kann hier die mechanische Stellung des Gaspedals 45 direkt erfasst werden. Diese direkte dem Fahrerwunsch entsprechende Stellung des Gaspedals 45 ist, wie in der Beschreibungseinleitung erläutert, daher hervorragend für eine Regelung geeignet und kann zusätzlich zur Regelgröße, die aus der Stellung der Drosselklappe 14 gewonnen wird, zur Motorsteuerung herangezogen werden.

Neben den Zuführungen 23 zur Sekundärlufleinblasung während der Kaltstartphase ist weiterhin eine Zuführung 23a vorgesehen, die hinter dem Katalysator 15 in die Abgasanlage 12 mündet. Durch ein Stellorgan 44 kann die Zuführung 23 oder die Zuführung 23a mit der Sekundärluftleitung verbunden oder abgekoppelt werden. Eine gleichzeitige Zuschaltung beider Zuführungen 23, 23a ist nicht vorgesehen. Die Zuführung 23a für die Sekundärluft ist für den Betriebszustand der Desulfatisierung des Katalysators 15 gedacht.

Die Zuführung 23a kann hier auch weggelassen werden, wobei die Abgasanlage dann nur noch mit dem Katalysator 15 als einfacher sogenannter 3-Wege-Kat mit Wegfall des Katalysators 17 aufgebaut ist und die Funktion der Sekundärluft sich auf eine schnellere Aufwärmphase des Katalysators 15 beim Kaltstart beschränken würde.

## Patentansprüche

1. Verfahren zur Regelung eins Sekundärluftstromes im Abgassystem eines Verbrennungsmotors für ein Kraftfahrzeug, mit
- Regeleinrichtungen (39,40) zur Auswertung von Stellund Sensorsignalen der Motorsteuerung und zur Einstellung des Sekundärluftstroms (21), **dadurch gekennzeichnet, dass**
- als Sensorgröße zur Einbeziehung in die Regelung mit der Regeleinrichtung (39) zur Einstellung des Sekundärluftstroms (21) die Stellung des Gaspedals (45) des Kraftfahrzeugs mit einbezogen wird.

2. Verfahren nach Anspruch 1, **dadurch gekennzeichnet, dass**
- die Stellung des Gaspedals (45) mit geeigneten Sensoren (46) erfasst wird und in einer zentralen Motorsteuerung für eine Vielzahl von Motorfunktionen ausgewertet wird und parallel dazu direkt der Regeleinrichtung (39) zur Einstellung des Sekundärluftstroms (21) zugeführt wird.

3. Vorrichtung zur Durchführung eines Verfahrens nach einem der vorhergehenden Ansprüche, **dadurch gekennzeichnet, dass**
- am Gaspedal (54) des Kraftfahrzeuges ein Stellungssensor (46) für die mechanische Auslenkung des Gaspedals vorhanden ist und das Ausgangsignal des Stellungssensors der Regeleinrichtung (39) zur Einstellung des Sekundärluftstroms (40) zugeführt wird.

4. Vorrichtung nach Anspruch 3, **dadurch gekennzeichnet, dass**
- die Sekundärluftzuführung in eine Zuführung (23) einer Abgasanlage (12) vor einem Katalysator (15) mündet, dem hier noch ein Speicherkatalysator (17) nachgeschaltet ist.

5. Vorrichtung nach Anspruch 3 oder 4, **dadurch gekennzeichnet, dass**
- das Ausgangsignal des Stellungssensors (46) über ein fahrzeugeigenes Bussystem mit der Regeleinrichtung (39) zur Einstellung des Sekundärluftstroms (21) und anderen Regelsystemen verbunden ist.
